# EUROPÄISCHE PATENTSCHRIFT

(11) **EP 1 750 095 B1**
(45) Veröffentlichungstag und Bekanntmachung des Hinweises auf die Patenterteilung: **23.11.2016**
(21) Anmeldenummer: 05107194.2
(22) Anmeldetag: 04.08.2005
(51) Int. Cl.: G01D 3/08, G01D 5/14

(54) **Sensoranordnung mit wenigstens einem magnetempfindlichen Sensorelement sowie Verfahren zur Bestimmung eines Qualitätssignals für eine Sensoranordung**
Sensor assembly with at least one sensor element sensitive to a magnetic field and method for determination of a quality signal for a sensor assembly
Dispositif capteur avec au moins un élément capteur sensible aux champs magnétiques et méthode de détermination d'un signal de qualité pour un dispositif capteur

(43) Veröffentlichungstag der Anmeldung: 07.02.2007
(73) Patentinhaber: Getrag Ford Transmissions GmbH, 50725 Köln (DE)
(72) Erfinder: Leibbrandt, Martin, 50181, Bedburg (DE); Kather, Lutz, 53909 Zülpich (DE)

(56) Entgegenhaltungen:
- DE-A1- 4 011 949
- DE-B3- 10 308 683
- US-B1- 6 522 127

## Beschreibung

Die vorliegende Erfindung betrifft eine Sensoranordnung mit einem magnetempfindlichen Element gemäß dem Oberbegriff des Patentanspruches 1 sowie Verfahren zur Bestimmung eines Qualitätssignals sowie eines Positionssignals für eine derartige Sensoranordnung.

Magnetempfindliche, d.h. auf ein Magnetfeld ansprechende Sensoren, wie z.B. Hall-Sensoren oder magnetoresistive Sensoren, werden häufig zur Erkennung von Positionen in mechanischen Systemen eingesetzt. Eine Anwendung ist die Erkennung der Position eines Schalthebels zur Einstellung des Fahrerwunsches (z.B. P, R, N, D, L) bei einem automatischen Getriebe in einem Kraftfahrzeug, wobei der Schalthebel über keine mechanische Verbindung zu dem automatischen Getriebe verfügt (sog. "Shift by Wire"-System). Eine Erkennung über magnetische Elemente hat gegenüber konventionellen elektromechanischen Kontakten den Vorteil, dass Kontaktprobleme aufgrund der berührungslosen Abtastung ausgeschlossen werden können. Bei Wegfall einer mechanischen Rückfallebene für die Übertragung eines Getriebe-Fahrerwunsches an das Getriebe, wie dies bei einem "Shift by Wire"-System der Fall ist, sind an die Zuverlässigkeit der Erkennung der Schalthebelposition besonders hohe Sicherheitsanforderungen zu stellen. Diesen Sicherheitsanforderungen versucht man im Stand der Technik dadurch nachzukommen, dass durch einen mit dem Schalthebel mitbewegten Signalgeber mit einem vorgegebenen Magnetisierungsmuster sowie durch mehrere nebeneinander angeordnete Hallsensoren, die das Magnetisierungsmuster abtasten, ein binär codiertes Signal entsprechend der aktuellen Schalthebelstellung erzeugt wird. Dabei weist die Kodierung - beispielsweise unter Verwendung eines Hamming-Codes - eine gewisse Redundanz auf, d.h., dass nur ein Teil der möglichen Bitkombinationen gültige Positionen darstellt, so dass Bitfehler in dem abgetasteten Signal zu einem ungültigen Bitwort führen und so in einem gewissen Umfange erkannt bzw. korrigiert werden können. Je sicherer die Fehlererkennung sein soll, desto größer muss die Anzahl der erforderlichen zusätzlichen redundanten Bits und damit die Anzahl der zusätzlichen Sensoren sein. Bei zwei redundanten Bits können beispielsweise maximal nur zwei gleichzeitig auftretende Bitfehler (Doppelfehler) erkannt werden, so dass bei einer größeren Anzahl von Bitfehlern das Datenwort fälschlicherweise als zulässige Schalthebelposition interpretiert werden kann. Ferner führen redundante Kodierungen dann nicht weiter, wenn eine Sensorstörung dazu führt, dass das gestörte Ausgangssignal zufälligerweise einer gültigen Schalthebelposition entspricht.

Die DE 103 08 683 B3 offenbart eine Sensoranordnung gemäß dem Oberbegriff des Patentanspruches 1 in Form eines Multiturn-Drehgebers sowie ein Verfahren zur Bestimmung eines Qualitätssignals bei einer solchen Sensoranordnung durch Erzeugen eines Prüffeldes mittels des wenigstens einen Prüfspulenelementes und Ausgabe eines auf das Sensorelement bezogenen Qualitätssignals, das angibt, ob Schaltpunkte der Sensorelemente in einem festgelegten Toleranzbereich liegen.

Die DE 40 11 949 A1 offenbart eine Magnettauchsonde mit mono- oder bistabilen magnetisch schaltbaren Kontaktgebern, die mit einer Prüfeinrichtung in Form von um die Kontaktgeber gewickelten Spulen versehen sind, die elektrisch ansteuerbar sind, um die Funktionsfähigkeit der Kontaktgeber zu überprüfen.

Die US 6 522 127 B1 offenbart eine Vorrichtung zur Messung des Drehwinkels eines Bauteils mit Hilfe von in das Bauteil integrierten Sensorelementen, z.B. Hallsensoren, und mit Prüfspulenelementen zum Prüfen der Sensorelemente.

Der vorliegenden Erfindung liegt die Aufgabe zugrunde, eine Sensoranordnung bzw. entsprechende Auswerteverfahren zu schaffen, durch die die Verlässlichkeit des Sensorsignals ohne Unterbrechung der Positionserkennung und in jeder beliebigen Stellung des Permanentmagnetelements verifiziert werden kann.

Die Lösung der vorgenannten Aufgabe erfolgt durch eine Sensoranordnung mit den Merkmalen des Patentanspruches 1 sowie durch Verfahren gemäß den Patentansprüchen 7 und 10.

Vorteilhafte Ausgestaltungen der Erfindung sind in den Unteransprüchen beschrieben.

Im Rahmen der vorliegenden Erfindung wird vorgeschlagen, dass dem Sensorelement wenigstens ein Prüfspulenelement zugeordnet wird, das aus einer durch eine Auswerteinheit kontrollierbaren Prüfstromquelle mit Strom versorgt wird, und durch das dem Sensorelement ein magnetisches Prüffeld aufprägbar ist. Die Auswerteinheit ist dahingehend ausgebildet, ein Prüffeld zu erzeugen, die Reaktion des Sensorausgangssignals mit einer erwarteten Reaktion zu vergleichen und daraus ein die Verlässlichkeit des ermittelten Positionssignales anzeigendes Qualitätssignal zu erzeugen. Der Zustand der Sensoren wird somit durch Applizieren eines variablen Prüffeldes aktiv überwacht. Dabei wird durch die Auswerteinheit verglichen, ob sich das Sensorausgangssignal bei Anlegen des Prüffeldes in der erwarteten Weise qualitativ (d.h. abhängig von der Magnetfeldpolarität positiv oder negativ) und quantitativ verändert. Daraus wird ein Qualitätssignal ermittelt, das entweder binärer Art sein kann (z.B. 1 = Anordnung intakt oder 0 = Anordnung defekt) oder auch feiner abgestuft ausgebildet sein kann (z.B. 3 = Reaktion auf Prüfsignal wie erwartet, 2 = Reaktion schwach, 1 = keine Reaktion). Im Rahmen dieser Anmeldung sollen niedrigere Werte für das Qualitätssignal einen geringeren Vertrauensgrad repräsentieren.

Der konstruktive Aufwand für eine derartige Prüfspule bzw. deren Ansteuerung ist geringer als das Vorsehen zusätzlicher redundanter Sensoren. Ferner ist im Rahmen der Erfindung eine aktive Kontrolle der Sensorelemente möglich, so dass auch für den Fall, dass die gestörten Sensorausgangssignale zufällig eine gültige Schalthebelposition anzeigen, der entsprechende Fehler detektiert werden kann. Im Rahmen der Erfindung wird nicht nur das Sensorelement, sondern die gesamte folgende Signalkette einschließlich der Auswerteinheit auf korrekte Funktion überprüft.

Das Prüfspulenelement ist bevorzugt um die Sensorelemente herum angeordnet, so dass das Sensorelement von den Feldlinien des Prüfspulenelements optimal durchsetzt ist. Zur Verstärkung des Feldes können auch zusätzliche Bündelungselemente wie ein Eisenkern in der Mitte der Spule vorgesehen sein. Die Prüfspule kann auch auf einer die Sensorelemente tragenden Leiterplatte mittels gedruckter Leiterbahnen ausgebildet sein.

Da im Rahmen einer bevorzugten Anwendung der vorliegenden Erfindung zur Erkennung verschiedener, diskreter Schalthebelpositionen mehrere, nebeneinander liegende Magnetfeldsensoren eingesetzt werden, können diese entweder von einer gemeinsamen Prüfspule umgeben sein, oder es können separate Spulen für einzelne Sensorelemente oder Gruppen von Sensorelementen vorgesehen sein.

Die Auswertung des Prüfvorganges hängt davon ab, welche Ausgangssignale die Sensorelemente liefern. Liefern die Sensorelemente - wie z.B. bei üblichen Hall-Sensoren - ein Analogsignal, so kann dieses Signal nach einer Analog-DigitalWandlung in einem Mikrocontroller daraufhin untersucht werden, ob durch das Zuschalten der Prüfspule ein Offset im Ausgangssignal des Sensorelementes auftritt. Um die Stärke des Prüffeldes möglichst gering dimensionieren zu können, kann der Sensorwert vor und nach Zuschalten des Prüffeldes mehrfach gemessen und durch eine Mittelwertbildung geglättet werden, so dass Fluktuationen im Signal weggemittelt und auf diese Weise auch durch Prüffelder bedingte Offsets erkannt werden, deren Amplitude im Bereich des normalen Signalrauschens liegt. Auch ist es denkbar, dem Prüffeld eine gewisse Frequenz aufzuprägen und die Reaktion des Sensorsignals durch eine Analyse im Frequenzraum (Fourier-Analyse) zu analysieren.

Zur Erhöhung der Amplitude des aufgeprägten Offsets kann es - sofern die Prüfstromquelle umpolbar ist - auch zweckmäßig sein, die Prüfspule bipolar anzusteuern, d.h. das Prüffeld zunächst mit einer bestimmten Polarität anzulegen und dann die Polarität zu wechseln und dabei die Änderung des Sensorausgangssignals zu überwachen. Dadurch kann bei gegebener Stromstärke gegenüber unipolarer Ansteuerung die doppelte Amplitude erreicht werden.

Liefern die Sensorelemente von vornherein digitale Ausgangssignale, die die Polarität des die Sensorelemente durchsetzenden Magnetfeldes wiedergeben, so muss die dem Sensorelement zugeordnete Prüfspule ein so starkes Magnetfeld erzeugen, dass sich der Ausgangswert des Sensorelements entsprechend ändert.

Die Versorgungsspannung für das Prüfspulenelement oder die Prüfspulenelemente kann entweder über eine separate Leitung von einer Prüfstromquelle in der Auswerteinheit zugeführt werden. Zur Einsparung von Leitungen kann jedoch auch vorgesehenen sein, dass der Prüfstrom aus der Versorgungsspannung für die Sensorelemente gewonnen wird. Dabei wird der durch die Prüfspule fließende Strom insbesondere durch eine Variation der Versorgungsspannung variiert. Schaltungstechnisch kann hierzu z.B. eine Zenerdiode in Reihe mit der Prüfspule angeordnet werden. Diese in Reihe geschalteten Elemente können dann mit der Sensorversorgungsspannung verbunden werden, wobei die Zenerdiode in Sperrrichtung geschaltet ist. Die normale Spannungsversorgung liegt knapp unterhalb der Durchbruchspannung der Zenerdiode. Durch Erhöhen der Spannung auf die Durchbruchspannung fließt ein Strom durch die Zenerdiode und die Prüfspule, wobei die Versorgungsspannung der Sensorelemente lediglich geringfügig auf die Durchbruchspannung der Zenerdiode ansteigt.

Im Rahmen eines erfindungsgemäßen Prüfverfahrens können neben der Reaktion auf das Prüffeld weitere Qualitätskriterien herangezogen werden:
- Falls das Sensorelement ein analoges Ausgangssignal für die Stärke des Magnetfeldes liefert, kann eine Analyse des Sensorausgangssignals hinsichtlich natürlicher Fluktuationen erfolgen. Bei einem intakten Hallelement sollten natürliche Schwankungen des Signals, verursacht durch dynamische Abstandsänderungen, überlagerte Fremdfelder, Temperaturdrift etc. detektierbar sein. Hallsensoren, die näherungsweise konstante Signale liefern, gelten als bedingt vertrauenswürdig. Falls innerhalb eines vorgegebenen Analysezeitraumes keine Änderungen des Ausgangssignals im Bereich der natürlichen Fluktuationen festgestellt werden können, wird das Qualitätssignal entsprechend reduziert.
- Falls es sich bei dem wenigstens einen Sensorelement um einen ratiometrischen Sensor handelt, d.h. ein Sensorelement, dessen Ausgangssignal der Versorgungsspannung folgt, kann eine Variation der Versorgungsspannung des Sensorelementes erfolgen. Hierzu wird die Versorgungsspannung durch einen variablen und von der Auswerteinheit ansteuerbaren Spannungsregler erzeugt. Das erfasste Sensorsignal sollte sich auf eine Änderung der Versorgungsspannung hin näherungsweise im selben Verhältnis ändern. Falls dies nicht der Fall ist, wird das Qualitätssignal ebenfalls entsprechend reduziert.
- Ferner kann zur Erhöhung der Erkennungssicherheit vorgesehen sein, dass die dem Hallsensoren durch die Permanentmagnete aufgeprägten Magnetfelder zu Ausgangssignalen führen, die innerhalb vorgegebener Spannungsfenster liegen, insbesondere einem High-Spannungsfenster für einen gültigen logisch aktiven "1"-Pegel und einem Low-Spannungsfenster für einen logisch inaktiven "0"-Pegel. Der Abstand der beiden Fenster wird vorzugsweise größer als die jeweilige Breite der Fenster gewählt, so dass ein Low-High-Wechsel bei einer Verschiebung des Messfensters, z.B. durch Störfelder, niemals innerhalb eines Fensters erfolgen kann. Dadurch, dass der Signalabstand zwischen logisch aktivem und inaktivem Zustand größer sein muss als die Breite der Fenster, wandert das Signal auch bei einer Offset-Verschiebung in jedem Fall aus einem der Spannungsfenster heraus. Ob das Ausgangssignal in einem zulässigen Spannungsfenster liegt, wird vorzugsweise ohne angelegtes Prüffeld überprüft. Falls dies nicht der Fall ist, wird das Qualitätssignal ebenfalls entsprechend reduziert.

Insgesamt wird auf diese Weise ein Qualitätssignal generiert, das sich in einer bevorzugten Ausgestaltung zwischen intakt und defekt in mehreren Zwischenstufen unterscheidet. Die Bestimmung des Qualitätssignals wird in regelmäßigen Intervallen durchgeführt oder immer dann initiiert, sobald eine für die Bestimmung des Positionssignals signifikante Änderung des Sensorsignals festgestellt wird, d.h. sobald sich die durch die Sensoreinheit detektierte Position ändert (bzw. zu ändern scheint). Die entsprechende Änderung wird somit jeweils sofort verifiziert.

Falls sich das Sensorsignal während des Bestimmungsvorganges signifikant ändert, wird der Bestimmungsvorgang abgebrochen und erneut begonnen. Der Prüfalgorithmus kann in wenigen Millisekunden durchlaufen werden, so dass die Erfassungsgeschwindigkeit nicht beeinflusst ist.

Das Qualitätssignal wird bei dem bevorzugten Einsatz der Erfindung bei einem Getriebewahlhebel eines automatischen Getriebes wie folgt weiterverarbeitet, wenngleich der Einsatzzweck selbstverständlich nicht hierauf beschränkt ist: Durch einen mit dem Schalthebel mitbewegten Signalgeber mit einem vorgegebenen Magnetisierungsmuster sowie durch mehrere nebeneinander angeordnete Hallsensoren, die das Magnetisierungsmuster abtasten, wird ein binär codiertes Signal entsprechend der aktuellen Schalthebelstellung erzeugt, wobei das Signal eine gewisse Redundanz aufweist. Es können je nach Kodierung Einfach- oder Mehrfachfehler erkannt und ggf. auch korrigiert werden.

Das generierte Qualitätssignal dient bevorzugt der Überprüfung der digitalen Fehlererkennung. So kann bei einer fehlertoleranten Kodierung, mit der Einfach- und Zweifachfehler erkannt werden können, auch ein weiterer Fehler erkannt werden, sofern die erkannten Fehler im digitalen Code nicht plausibel in Bezug auf die Qualitätssignale sind. Ein Algorithmus kann in einer bevorzugten Ausgestaltung wie folgt ablaufen: Die digitale Fehlerkennung meldet einen Fehler im Codewort, und durch dessen Korrektur werden die abweichenden Bitstellen bekannt. Dies gilt unter der Annahme, dass die maximal korrigierbare Anzahl an Fehler nicht überschritten wurde. Ist dies dagegen der Fall, wird zum falschen Codewort korrigiert. Die Qualitätskriterien zeigen in diesem Fall für die real defekten Hallsensoren schlechtere Werte an. Diese unplausible Situation ist Indiz für einen in der Kodierung nicht abgedeckten Mehrfachfehler.

Die Erfindung wird nachfolgend anhand der Zeichnungen beispielhaft näher erläutert. Es zeigen:
- Fig. 1: eine schematisches Funktionsdiagramm einer erfindungsgemäßen Sensoranordnung;
- Figuren 2 bis 4: verschiedene mögliche Prüfspulenanordnungen, und
- Figur 5: ein schematisches Signaldiagramm zur Erläuterung der vorliegenden Erfindung.

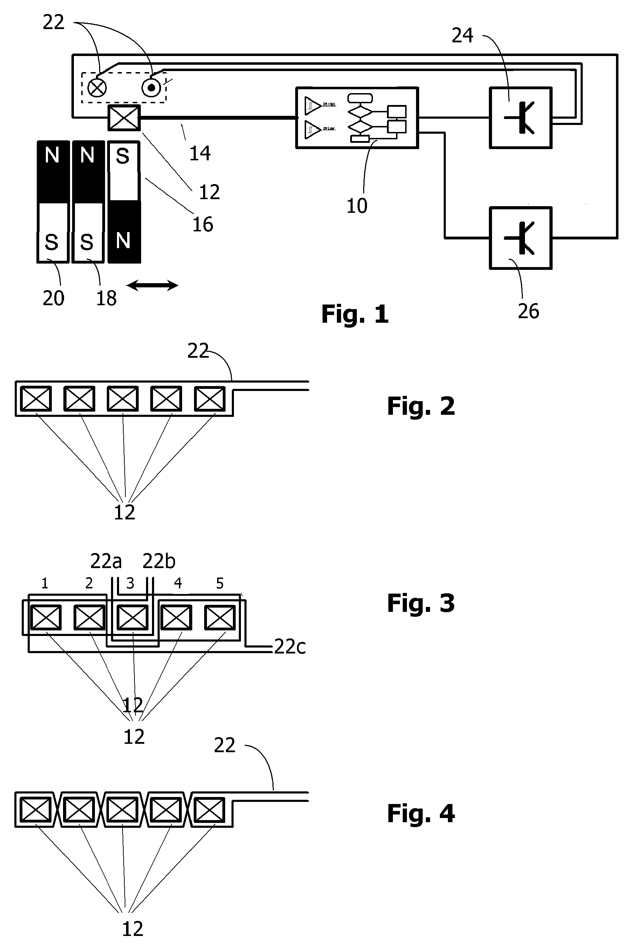

In Figur 1 ist schematisch eine Sensoranordnung mit einem einzigen ein Sensorelement bildenden Hallsensor 12 und einer Auswerteinheit 10 dargestellt. Um ein kodiertes Signal mit mehreren Bits zu erzeugen, sind in der Regel mehrere Hallsensoren vorgesehen (in Figur 1 nicht dargestellt). Der Hallsensor 12 wird von dem Magnetfeld einer (schwenkbar mit dem Gangwahlhebel gelagerten) Scheibe mit permanentmagnetischen Bereichen durchsetzt, wie in Figur 1 schematisch durch den rechten Permanentmagneten 16 einer Permanentmagnetengruppe 16, 18, 20 angedeutet. Bei einer Relativbewegung zwischen dem Hallsensor 12 und der Permanentmagnetengruppe 16, 18, 20 gelangt der Hallsensor zunächst in das umgekehrt polarisierte Magnetfeld des Magneten 18 und schließlich in den Bereich des Magneten 20, wodurch sich das über eine Signalleitung 14 an die Auswerteinheit übertragene analoge Ausgangssignal des Hallsensors 12 ändert. In der Auswerteinheit 10, die als üblicher Mikrocontroller ausgebildet sein kann, wird das Ausgangssignal des Hallsensors 12 digitalisiert und anhand vorgegebener Wertebereiche in ein binäres Signal umgewandelt.

Zur Überprüfung der Sensoranordnung ist oberhalb des Hallsensors 12 eine Prüfspule 22 angeordnet, wobei der Hallsensor auf der Mittenachse der Prüfspule 22 liegt. Auf diese Weise kann das Sensorelement selektiv mit einem Prüffeld durchsetzt werden. Die Feldstärke des Prüffeldes kann optional durch einen oberhalb des Hallsensors 12 angeordneten (nicht dargestellten) Eisenkern verstärkt werden.

Der der Prüfspule 22 zugeführte Prüfstrom wird mittels einer durch die Auswerteinheit 10 ansteuerbaren variablen Stromquelle 24 gesteuert, wobei im Normalbetriebszustand die Prüfspule 22 stromlos ist. Der Diagnosevorgang erfolgt dann wie vorstehend beschrieben. Um zusätzlich die Reaktion des Hallsensors 12 auf eine Variation der Versorgungsspannung zu ermitteln, kann die Versorgungsspannung mittels einer variablen Spannungsquelle 26 durch Einwirkung der Auswerteinheit 10 verändert werden.

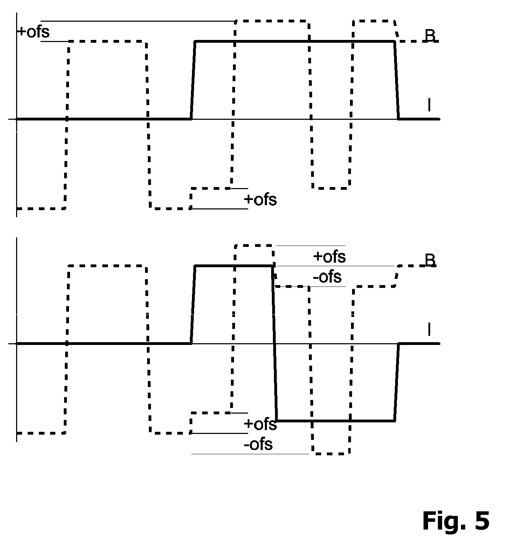

Gemäß Figur 5 ist schematisch ein beispielhaftes Ausgangssignal eines Hallsensors 12 (entsprechend dem Betrag der gemessenen magnetischen Flussdichte B) über die Zeit aufgetragen. Der primär durch die Permanentmagneten beeinflussten Flussdichte wird zusätzlich durch Bestromung einer Prüfspule 22 mit einem Strom I ein Offset +ofs bzw. -ofs aufgeprägt. Ein Bestromen der Prüfspule 22 mit unterschiedlicher Stromrichtung verdoppelt die Amplitude des Offsets, ohne die Strombelastung der Spule zu erhöhen (vgl. das untere Diagramm).

In den Figuren 2 bis 4 sind jeweils fünf Hallsensoren 12 in einer Draufsicht dargestellt, die in verschiedenen Konfigurationen von einer oder mehreren Prüfspulen 22 umgeben sind. In Figur 2 umgibt eine einzige Spule die Sensoren 12, wohingegen in der Konfiguration gemäß Figur 4 die Leiterschleifen jeweils zwischen den Sensoren 12 gekreuzt sind. In Figur 3 ist eine Ausführungsform dargestellt, bei der mehrere Prüfspulen 22a,b,c vorgesehen sind. Diese sind so angeordnet, dass jeder Hallsensor 12 von mindestens zwei Spulen beeinflusst wird. Eine Prüfspule 22a beeinflusst die Sensoren 3 bis 5; eine Prüfspule 22b die Sensoren 1 bis 3 und eine Prüfspule 22c die Sensoren 1, 2, 4, 5. In einer derartigen Anordnung kann neben der Funktion der Hallzelle auch die korrekte Funktion der Prüfspulen überprüft werden, da sich die Magnetfelder bei unterschiedlicher Bestromungsrichtung aufheben müssen. Bei den dargestellten drei Spulen 22a,b,c ist es möglich, die defekte Spule zu lokalisieren. Dazu wird jede mögliche Kombination, d.h. zwischen den Spulen 22a-b, den Spulen 22a-c und den Spulen 22b-c, mit jeweils entgegengesetzter Polarität getestet. Nur die Kombination mit intakten Spulen zeigt die erwartete aufhebende Wirkung.

Weiterhin kann eine Variation der Flussdichte durch Zu- und Abschalten einzelner Prüfspulen erzielt werden, so dass die jeweilige Prüfstromquelle 24 lediglich ein- und ausschaltbar sein muss.

## Patentansprüche

1. Sensoranordnung mit wenigstens einem magnetempfindlichen Sensorelement (12) und wenigstens einem, dem Sensorelement zugeordneten Permanentmagnetelement (16), wobei das wenigstens eine Sensorelement (12) und das wenigstens eine zugeordnete Permanentmagnetelement (16) relativ zueinander bewegbar sind, und das Magnetfeld durch das Sensorelement (12) gemessen und ein entsprechendes Sensorausgangssignal einer Auswerteinheit (10) zugeleitet wird, in der aus dem Ausgangssignal ein die Stellung zwischen dem Sensorelement (12) und Permanentmagnetelement (16) anzeigendes Positionssignal bestimmt wird, wobei dem Sensorelement (12) wenigstens ein Prüfspulenelement (22) zugeordnet ist, das aus einer durch die Auswerteinheit (10) kontrollierbaren Prüfstromquelle (24) mit Strom versorgt wird, und mittels dessen dem Sensorelement (12) ein magnetisches Prüffeld aufprägbar ist, und wobei die Auswerteinheit (10) dahingehend ausgebildet ist, ein Prüffeld zu erzeugen, die Reaktion des Sensorausgangssignals mit einer erwarteten Reaktion zu vergleichen und daraus ein die Verlässlichkeit des ermittelten Positionssignals anzeigendes Qualitätssignal zu erzeugen,
**dadurch gekennzeichnet, dass**
das Ausgangssignal des wenigstens einen Sensorelements (12) ein Analogsignal ist, dass die Stärke des dem Sensorelement (12) aufgeprägte Prüffeld derart dimensioniert ist, dass das durch das Prüffeld bedingte Offset eine Amplitude im Bereich des normalen Signalrauschens aufweist, so dass es das von der Auswerteinheit (10) bestimmte binär codierte Positionssignal normalerweise nicht ändert, und dass die Auswerteinheit (10) dahingehend ausgebildet ist, das Sensorausgangssignal darauf zu untersuchen, ob darin ein dem Prüffeld entsprechendes Offset auftritt.

2. Sensoranordnung nach Anspruch 1,
**dadurch gekennzeichnet, dass**
das wenigstens eine magnetempfindliche Sensorelement als Hallsensor (12) ausgebildet ist, und dass das wenigstens eine Prüfspulenelement als eine das Sensorelement (12) umgebende Spule (22) mit einer oder mehreren Windungen ausgebildet ist.

3. Sensoranordnung nach Anspruch 1 oder 2,
**dadurch gekennzeichnet, dass**
mehrere räumlich benachbarte Sensorelemente (12) vorgesehen sind, die jeweils von dem Magnetfeld eines oder mehrerer zugeordneter Prüfspulenelemente (22a,b,c) oder von dem Magnetfeld eines gemeinsamen Prüfspulenelementes (22) durchsetzt werden.

4. Sensoranordnung nach mindestens einem der Ansprüche 1 bis 3,
**dadurch gekennzeichnet, dass**
das wenigstens eine Prüfspulenelement (22) aus einer Versorgungsspannung für das wenigstens eine Sensorelement mit gespeist wird, und dass eine Variation des Prüfstromes über eine Variation der Versorgungsspannung erfolgt.

5. Sensoranordnung nach Anspruch 4,
**dadurch gekennzeichnet, dass**
die Versorgungsspannung des Sensorelementes vorzugsweise durch einen Spannungsregler, vorzugsweise eine Zenerdiode, stabilisiert wird.

6. Sensoranordnung nach mindestens einem der Ansprüche 1 bis 5,
**dadurch gekennzeichnet, dass**
diese mehrere, als Hallsensoren ausgebildete Sensorelemente (12) sowie ein Kodierelement aufweist, das auf seiner Oberfläche eine Abfolge von permanentmagnetisch ausgebildeten, in mehreren Spuren angeordneten magnetischen Bereichen mit unterschiedlichen Polaritäten aufweist, wobei die Spuren von den Sensorelementen (12) abgetastet werden, und wobei die Sensorausgangssignale derart konditioniert werden, dass abhängig von der Polarität der Magnetisierung entweder ein logisch aktiver "1 "-Pegel oder ein logisch inaktiver "0"-Pegel ausgegeben wird, so dass abhängig von der relativen Lage des Kodierelementes zu den Sensorelementen durch die Gesamtheit der binären Sensorausgangssignale ein binäres Codewort als Positionssignal erzeugt wird.

7. Verfahren zur Bestimmung eines Qualitätssignals bei einer Sensoranordnung nach mindestens einem der Ansprüche 1 bis 6 durch Erzeugen eines Prüffeldes mittels des wenigstens einen Prüfspulenelementes (22) und Ausgabe eines auf das Sensorelement bezogenen Qualitätssignals, das umso höher ist, desto stärker das Signal des wenigstens einen Sensorelementes mit der erwarteten Reaktion auf das Prüffeld übereinstimmt,
wobei das Qualitätssignal vorzugsweise gemäß einem oder mehreren der folgenden Schritte modifiziert wird:
a) falls das Sensorelement (12) ein nur von der Stärke des Magnetfeldes abhängendes Ausgangssignal liefert, Analyse des Sensorausgangssignals hinsichtlich natürlicher Fluktuationen und Verringerung des Qualitätssignals, falls innerhalb eines vorgegebenen Analysezeitraumes keine natürlichen Fluktuationen festgestellt werden können; und/oder
b) falls es sich bei dem wenigstens einen Sensorelement (12) um einen ratiometrischen Sensor handelt, Variation der Versorgungsspannung des Sensorelementes und, falls sich das Sensorsignal hierauf nicht wie erwartet ändert, Verringerung des Qualitätssignals;
**dadurch gekennzeichnet, dass**
das wenigstens eine Sensorelement (12) ein Analogsignal erzeugt, dass dem Sensorelement (12) ein Prüffeld aufgeprägt wird, dessen Stärke derart dimensioniert ist, dass das durch das Prüffeld bedingte Offset eine Amplitude im Bereich des normalen Signalrauschens aufweist, so dass es das von der Auswerteinheit (10) bestimmte binär codierte Positionssignal normalerweise nicht ändert, und dass das Sensorausgangssignal darauf untersucht wird, ob darin ein dem Prüffeld entsprechendes Offset auftritt.

8. Verfahren nach Anspruch 7,
**dadurch gekennzeichnet, dass**
die Sensoranordnung wenigstens zwei Prüfspulenelemente (22a,b,c) zur Erzeugung des Prüffeldes aufweist, wobei sich die Magnetfelder von jeweils zwei Prüfspulenelementen bei geeigneter entgegengesetzer Bestromung im Bereich wenigstens eines Sensorelements (12) im Wesentlichen aufheben, und dass
durch entgegengesetzte Bestromung der zwei Prüfspulenelemente und Überwachung des wenigstens einen Sensorelements (12) darauf, ob sich das Feld der beiden Spulen aufhebt, die Funktionsfähigkeit der Prüfspulenelemente überprüft wird.

9. Verfahren nach Anspruch 7 oder 8,
**dadurch gekennzeichnet, dass**
die Bestimmung des Qualitätssignals initiiert wird, sobald eine für die Bestimmung des Positionssignals signifikante Änderung des Sensorsignals festgestellt wird, und dass die Bestimmung des Qualitätssignals abgebrochen und erneut begonnen wird, falls sich das Sensorsignal während des Bestimmungsvorganges signifikant ändert.

10. Verfahren zur Bestimmung eines Positionssignals bei einer Sensoranordnung mit mehreren magnetempfindlichen Sensorelementen (12) nach Anspruch 6, wobei das binäre Codewort des Positionssignals eine vorgegebene Redundanz zur Erkennung und ggf. Korrektur von Bitfehlern aufweist, **dad**
**urch gekennzeichnet,** dass
ein Qualitätssignal für jedes Sensorelement gemäß einem Verfahren nach mindestens einem der Ansprüche 7 bis 9 bestimmt wird, und dass die im Rahmen der redundanten Kodierung als falsch erkannten Bits und die Qualitätssignale miteinander verglichen werden, und für den Fall, dass dieser Vergleich keine Übereinstimmung der Fehlerpositionen ergibt, ein Fehler angezeigt wird.

## Claims

1. Sensor arrangement having at least one magnetically sensitive sensor element (12) and at least one permanent magnet element (16) assigned to the sensor element, the at least one sensor element (12) and the at least one assigned permanent magnet element (16) being movable relative to one another, and the magnetic field being measured by the sensor element (12), and a corresponding sensor output signal being supplied to an evaluation unit (10) in which a position signal indicating the position between the sensor element (12) and the permanent magnet element (16) is determined from the output signal, at least one test coil element (22) being assigned to the sensor element (12), which test coil element is supplied with current from a test current source (24) controllable by the evaluation unit (10) and can be used to impress a magnetic test field on the sensor element (12), and the evaluation unit (10) being designed to generate a test field, to compare the response of the sensor output signal with an expected response and to generate a quality signal indicating the reliability of the determined position signal therefrom, cha
racterized in that
the output signal from the at least one sensor element (12) is an analogue signal, in that the strength of the test field impressed on the sensor element (12) is dimensioned such that the offset caused by the test field has an amplitude in the range of normal signal noise, with the result that it does not normally change the binary coded position signal determined by the evaluation unit (10), and in that the evaluation unit (10) is designed to examine the sensor output signal in order to determine whether an offset corresponding to the test field occurs therein.

2. Sensor arrangement according to Claim 1, cha
racterized in that
the at least one magnetically sensitive sensor element is in the form of a Hall sensor (12), and in that the at least one test coil element is in the form of a coil (22) which surrounds the sensor element (12) and has one or more turns.

3. Sensor arrangement according to Claim 1 or 2, cha
racterized in that
a plurality of spatially adjacent sensor elements (12) are provided, each of which is penetrated by the magnetic field of one or more assigned test coil elements (22a,b,c) or by the magnetic field of a common test coil element (22).

4. Sensor arrangement according to at least one of Claims 1 to 3,
**characterized in that**
the at least one test coil element (22) is concomitantly supplied from a supply voltage for the at least one sensor element, and **in that** the test current is varied by varying the supply voltage.

5. Sensor arrangement according to Claim 4,
**characterized in that**
the supply voltage of the sensor element is preferably stabilized by a voltage regulator, preferably a Zener diode.

6. Sensor arrangement according to at least one of Claims 1 to 5,
**characterized in that**
it has a plurality of sensor elements (12) in the form of Hall sensors and a coding element which has, on its surface, a sequence of permanent-magnetic magnetic regions which are arranged in a plurality of tracks and have different polarities, the tracks being scanned by the sensor elements (12), and the sensor output signals being conditioned in such a manner that, depending on the polarity of the magnetization, either a logically active "1" level or a logically inactive "0" level is output, with the result that all of the binary sensor output signals generate a binary code word as the position signal depending on the relative position of the coding element with respect to the sensor elements.

7. Method for determining a quality signal in a sensor arrangement according to at least one of Claims 1 to 6 by generating a test field by means of the at least one test coil element (22) and outputting a quality signal which is based on the sensor element and is higher, the greater the match between the signal from the at least one sensor element and the expected response to the test field,
the quality signal preferably being modified according to one or more of the following steps:
a) if the sensor element (12) provides an output signal which is dependent only on the strength of the magnetic field, analysis of the sensor output signal with respect to natural fluctuations and reduction of the quality signal if no natural fluctuations can be determined within a predefined analysis period; and/or
b) if the at least one sensor element (12) is a ratiometric sensor, variation of the supply voltage of the sensor element and, if the sensor signal does not change as expected in response thereto, reduction of the quality signal;
**characterized in that**
the at least one sensor element (12) generates an analogue signal, **in that** a test field is impressed on the sensor element (12), the strength of which test field is dimensioned such that the offset caused by the test field has an amplitude in the range of normal signal noise, with the result that it does not normally change the binary coded position signal determined by the evaluation unit (10), and **in that** the sensor output signal is examined in order to determine whether an offset corresponding to the test field occurs therein.

8. Method according to Claim 7,
**characterized in that**
the sensor arrangement has at least two test coil elements (22a,b,c) for generating the test field, the magnetic fields of two test coil elements in each case substantially cancelling one another out in the case of suitable opposite energization in the region of at least one sensor element (12), and **in that**
the functionality of the test coil elements is checked by energizing the two test coil elements in an opposite manner and monitoring the at least one sensor element (12) in order to determine whether the fields of the two coils cancel one another out.

9. Method according to Claim 7 or 8,
**characterized in that**
the determination of the quality signal is initiated as soon as a change in the sensor signal which is significant for the determination of the position signal is determined, and **in that** the determination of the quality signal is aborted and started again if the sensor signal changes significantly during the determination process.

10. Method for determining a position signal in a sensor arrangement having a plurality of magnetically sensitive sensor elements (12) according to Claim 6, the binary code word of the position signal having a predefined redundancy for the purpose of detecting and possibly correcting bit errors,
**characterized in that**
a quality signal is determined for each sensor element in accordance with a method according to at least one of Claims 7 to 9, and **in that** the bits detected as incorrect during redundant coding and the quality signals are compared with one another and an error signal is displayed if this comparison does not reveal any match of the error positions.

## Revendications

1. Dispositif capteur comportant au moins un élément capteur (12) sensible aux champs magnétiques et au moins un élément à aimant permanent (16) associé à l'élément capteur, dans lequel l'au moins un élément capteur (12) et l'au moins un élément à aimant permanent (16) associé sont mobiles l'un par rapport à l'autre et le champ magnétique mesuré par l'élément capteur (12) et un signal de sortie de capteur correspondant sont délivrés à une unité d'analyse (10) dans laquelle un signal de position représentant le positionnement entre l'élément capteur (12) et l'élément à aimant permanent (16) est déterminé à partir du signal de sortie, dans lequel on associe à l'élément capteur (12) au moins un élément à bobine de test (22) qui est alimenté en courant à partir d'une source de courant de test (24) pouvant être commandée par l'unité d'analyse (10) et au moyen duquel un champ de test magnétique peut être appliqué à l'élément capteur (12), et dans lequel l'unité d'analyse (10) est conçue pour générer un champ de test, pour comparer la réaction du signal de sortie de capteur à une réaction attendue et pour générer à partir de celui-ci un signal de qualité indiquant une fiabilité du signal de position déterminé,
**caractérisé en ce que** le signal de sortie de l'au moins un élément capteur (12) est un signal analogique, **en ce que** l'intensité du champ de test appliqué à l'élément capteur (12) est réglée de manière à ce que le décalage provoqué par le champ de test présente une amplitude se situant dans le domaine du bruit de signal normal de manière à ce qu'il ne modifie pas normalement le signal de position déterminé par l'unité d'analyse (10) et codé de manière binaire,
et **en ce que** l'unité d'analyse (10) est conçue de manière à analyser le signal de sortie de capteur pour déterminer s'il apparaît dans celui-ci un décalage correspondant au champ de test.

2. Dispositif capteur selon la revendication 1, **caractérisé en ce que** l'au moins un élément capteur sensible aux champs magnétiques est réalisé sous la forme d'un capteur à effet Hall (12) et **en ce que** l'au moins un élément à bobine de test est réalisé sous la forme d'une bobine (22) entourant l'élément capteur (12) et ayant une ou plusieurs spires.

3. Dispositif capteur selon la revendication 1 ou 2,
**caractérisé en ce qu'**il est prévu plusieurs éléments capteurs (12) spatialement adjacents qui sont respectivement traversés par le champ magnétique d'un ou plusieurs éléments à bobine de test (22a,b,c) ou par le champ magnétique d'un élément à bobine de test commun (22).

4. Dispositif capteur selon au moins l'une des revendications 1 à 3,
**caractérisé en ce que** l'au moins un élément à bobine de test (22) est alimenté à partir d'une tension d'alimentation destinée à l'au moins un élément capteur et **en ce qu'**une variation du courant de test se produit par l'intermédiaire d'une variation de la tension d'alimentation.

5. Dispositif capteur selon la revendication 4,
**caractérisé en ce que** la tension d'alimentation de l'élément capteur est de préférence stabilisée au moyen d'un régulateur de tension, de préférence une diode Zener.

6. Dispositif capteur selon au moins l'une des revendications 1 à 5,
**caractérisé en ce qu'**il comporte de multiples éléments capteurs (12) réalisés sous la forme de capteurs à effet Hall ainsi qu'un élément codeur qui comporte sur sa surface une série de régions magnétiques réalisées sous la forme d'aimants permanents et disposées dans de multiples pistes ayant des polarités différentes, dans lequel les pistes sont balayées par les éléments capteurs (12) et dans lequel les signaux de sortie de capteurs sont conditionnés de manière à fournir en sorite soit un niveau logique "1" actif soit un niveau logique "0" inactif en fonction de la polarité de la magnétisation de manière à ce qu'un mot de code binaire soit généré par l'ensemble des signaux de sortie de capteurs binaires en tant que signal de position en fonction de la position relative de l'élément codeur par rapport aux éléments capteurs.

7. Procédé de détermination d'un signal de qualité dans un dispositif capteur selon au moins l'une des revendications 1 à 6 par génération d'un champ de test au moyen de l'au moins un élément à bobine de test (22) et fourniture en sortie d'un signal de qualité concernant l'élément capteur, qui est d'autant plus élevé que le signal de l'au moins un élément capteur concorde avec la réaction attendue au champ de test, dans lequel le signal de qualité est modifié par l'une ou plusieurs des étapes suivantes :
a) dans le cas où l'élément capteur (12) délivre un signal de sortie ne dépendant que de l'intensité du champ magnétique, analyser le signal de sortie de capteur en ce qui concerne les fluctuations naturelles et la diminution du signal de qualité dans le cas où aucune fluctuation naturelle ne peut être déterminée au cours d'un intervalle de temps d'analyse prédéterminé ; et/ou
b) dans le cas où l'au moins un élément capteur (12) est un capteur ratiométrique, faire varier la tension d'alimentation de l'élément capteur, et dans le cas où le signal de capteur ne varie alors pas de la manière attendue, diminuer le signal de qualité ;
**caractérisé en ce que** l'au moins un élément capteur (12) génère un signal analogique, **en ce qu'**un champ de test est appliqué à l'élément capteur (12), dont l'intensité est réglée de manière à ce que le décalage provoqué par le champ de test présente une amplitude se situant dans le domaine du bruit de signal normal de manière à ce qu'il ne fasse pas varier normalement le signal de position déterminé par l'unité d'analyse (10) et codé de manière binaire,
et **en ce que** le signal de sortie de capteur est analysé pour déterminer s'il apparaît dans celui-ci un décalage correspondant au champ de test.

8. Procédé selon la revendication 7,
**caractérisé en ce que** le dispositif capteur comporte au moins deux éléments à bobine de test (22a,b,c) destinés à générer le champ de test, dans lequel les champs magnétiques de deux éléments à bobine de test respectifs sont sensiblement annulés lors d'une alimentation en courant en sens opposé appropriée dans la région d'au moins un élément capteur (12),
et **en ce que**, en alimentant en courant en sens opposé les deux éléments à bobine de test et en surveillant l'au moins un élément capteur (12), l'aptitude au fonctionnement des éléments à bobine de test est vérifiée **en ce que** concerne le fait de savoir si le champ des deux bobines s'annule.

9. Procédé selon la revendication 7 ou 8, **caractérisé en ce que** la détermination du signal de qualité est déclenchée dès qu'une variation significative du signal de capteur est établie pour la détermination du signal de position et **en ce que** la détermination du signal de qualité est interrompue et recommencée dans le cas où le signal de capteur varie de manière significative pendant le processus de détermination.

10. Procédé de détermination d'un signal de position dans un dispositif capteur comportant de multiples éléments capteurs sensibles aux champs magnétiques (12) selon la revendication 6, dans lequel le mot de code binaire du signal de position présente une redondance prédéterminée pour détecter et le cas échéant corriger des erreurs sur les bits,
**caractérisé en ce qu'**un signal de qualité est déterminé pour chaque élément capteur conformément à un procédé selon au moins l'une des revendications 7 à 9, et **en ce que** les bits reconnus comme étant erronés dans le cadre du codage redondant et les signaux de qualité sont comparés les uns aux autres et, dans le cas où ladite comparaison n'indique aucune concordance entre les positions erronées, une erreur est indiquée.
